(19) Europäisches Patentamt
European Patent Office
Office européen des brevets

(11) EP 2 880 426 B1

(12) **FASCICULE DE BREVET EUROPEEN**

(45) Date de publication et mention de la délivrance du brevet:
**27.05.2020 Bulletin 2020/22**

(21) Numéro de dépôt: **13750857.8**

(22) Date de dépôt: **30.07.2013**

(51) Int Cl.:
**G01N 21/95** *(2006.01)*   **G01N 21/64** *(2006.01)*

(86) Numéro de dépôt international:
**PCT/EP2013/066043**

(87) Numéro de publication internationale:
**WO 2014/020046 (06.02.2014 Gazette 2014/06)**

(54) **PROCÉDÉ D'ANALYSE DE LA STRUCTURE CRISTALLINE D'UN MATÉRIAU SEMI-CONDUCTEUR POLY-CRISTALLIN**

VERFAHREN ZUR ANALYSE DER KRISTALLSTRUKTUR EINES POLYKRISTALLINEN HALBLEITERS

METHOD FOR ANALYSING THE CRYSTAL STRUCTURE OF A POLYCRYSTALLINE SEMICONDUCTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.08.2012 FR 1257556**

(43) Date de publication de la demande:
**10.06.2015 Bulletin 2015/24**

(73) Titulaires:
• **Centre National de la Recherche Scientifique**
**75794 Paris Cedex 16 (FR)**
• **Electricité de France (EDF)**
**75008 Paris (FR)**

(72) Inventeurs:
• **LOMBEZ, Laurent**
**92000 Nanterre (FR)**
• **GUILLEMOLES, Jean-François**
**F-75013 Paris (FR)**
• **DELAMARRE, Amaury**
**35220 Châteaubourg (FR)**

(74) Mandataire: **Osha Liang**
**2, rue de la Paix**
**75002 Paris (FR)**

(56) Documents cités:
**WO-A2-03/041123**

• **PELOSO MATTHEW ET AL: "Polarization analysis of luminescence for the characterization of silicon wafer solar cells", APPLIED PHYSICS LETTERS, AIP, AMERICAN INSTITUTE OF PHYSICS, MELVILLE, NY, US, vol. 98, no. 17, 29 avril 2011 (2011-04-29), pages 171914-1-171914-3, XP012140460, ISSN: 0003-6951, DOI: 10.1063/1.3584857 cité dans la demande**
• **M. CHAMARRO ET AL: "Photoluminescence polarization of semiconductor nanocrystals", JOURNAL OF LUMINESCENCE, vol. 70, 1996, pages 222-237, XP002688507, NL**

**Description**

La présente invention concerne les techniques d'analyse de la structure cristalline des matériaux semi-conducteurs poly-cristallins, et notamment les techniques de caractérisation structurale des matériaux absorbeurs poly-cristallins utilisés dans les cellules photovoltaïques.

L'attractivité de l'énergie photovoltaïque comme alternative aux énergies fossiles a donné lieu au développement de produits comme des panneaux solaires mettant en œuvre une multitude de cellules photovoltaïques.

Le développement du marché des produits photovoltaïques a dynamisé la recherche-développement dans ce domaine, et une partie de cet effort de recherche-développement s'est concentré sur le développement de méthodes de caractérisation des matériaux utilisés afin d'améliorer les produits existants et d'ouvrir la voie à de nouvelles générations de produits. En outre, l'essor commercial sur ces marchés a rendu nécessaires la définition de tests de qualité et de conformité aux performances attendues (notamment en termes de rendement de conversion) et le développement de procédures de test et d'analyses de performance, qui soient compatibles avec les impératifs de fabrication en série.

C'est le cas notamment des cellules photovoltaïques à base de matériaux poly-cristallins de type semi-conducteur pour lesquels des techniques de détection des défauts de structure ou de microstructure cristalline ont été développées. Par exemple, l'article « Polarization analysis of luminescence for the characterization of silicon wafer solar cells » de M. Peloso, B. Hoex et A-G. Aberle (Applied Physics Letters 98, 171914 (2011)) décrit une méthode d'analyse des défauts d'une cellule photovoltaïque par analyse de la polarisation d'un signal d'électroluminescence émis par la cellule analysée.

Au-delà de la détection de défauts, des techniques de caractérisation de structure ou de microstructure de matériaux poly-cristallins ont aussi été développées. La caractérisation de la structure ou microstructure des matériaux poly-cristallins est généralement faite à l'aide d'un microscope électronique à balayage qui utilise le mode de fonctionnement EBSD (pour « Electron BackScatter Diffraction »), ou bien à l'aide d'un microscope électronique à transmission (TEM, pour « Transmission Electronic Microscope »). Ces outils de caractérisation de matériaux sont d'utilisation lourde du fait qu'ils nécessitent une préparation d'échantillon à analyser qui s'avère difficile, ce qui les rend peu compatibles avec les impératifs de tests de qualité et de conformité dans le cadre d'une fabrication en série. En effet, il est nécessaire pour utiliser ces techniques de préparer l'échantillon à analyser par un polissage de surface pour éliminer les rugosités. Cette préparation s'avère délicate à mettre en œuvre et l'analyse de l'échantillon est parfois impossible du fait, par exemple, des problèmes d'écrouissage engendrés par l'étape de polissage du matériau.

La technique de cartographie de spectres Raman en polarisation peut aussi être envisagée aux fins de caractérisation de la structure ou microstructure de matériaux poly-cristallins, mais elle s'avère en pratique couteuse, car elle nécessite un laser de haute qualité spectrale ainsi qu'un spectromètre de très haute résolution.

Un but de la présente invention est d'apporter une solution aux défauts des techniques de caractérisation de matériaux poly-cristallins exposés ci-dessus.

L'invention propose ainsi un procédé d'analyse de la structure cristalline d'un matériau semi-conducteur poly-cristallin, comprenant l'excitation du matériau de manière à générer l'émission par le matériau d'un signal de luminescence, la détection, en chaque point d'un maillage d'une zone spatiale prédéterminée du matériau, du signal de luminescence suivant un angle de polarisation variable, dans une bande de fréquences de largeur supérieure ou égale à la largeur de bande interdite du matériau, l'estimation, en chaque point du maillage de la zone spatiale prédéterminée du matériau, d'une donnée caractéristique de la modulation du signal de luminescence, modélisée par une somme de sinusoïdes, en fonction de l'angle de polarisation, à partir du signal détecté pour ledit point du maillage, et la génération d'une représentation de la donnée caractéristique sur l'ensemble des points du maillage de la zone spatiale prédéterminée.

Le procédé proposé a l'avantage de permettre une caractérisation simple, rapide et peu onéreuse des propriétés structurales de matériaux poly-cristallins en comparaison des techniques évoquées ci-dessus. En particulier, le procédé proposé n'est pas destructif (il ne dégrade pas l'échantillon), et ne nécessite aucune préparation d'échantillon. Il est donc possible de réutiliser l'échantillon une fois son analyse effectuée, d'analyser un échantillon en cours de fabrication (par exemple, pour une cellule photovoltaïque, lors du processus de croissance du matériau par dépôt sur un substrat, pour vérifier que le processus de croissance donne des résultats a priori satisfaisants). Le procédé proposé convient donc particulièrement bien aux impératifs de la fabrication de produits en série, puisqu'il permet l'analyse et le test in-situ des produits à tous les stades de la fabrication.

Le procédé proposé pourra avantageusement être mis en œuvre avec une modélisation du signal de luminescence modulé de la forme: $I_{lum} = A_0 + \sum_{k=\{1...K\}} A_k . sin(n_k \theta + \varphi_k)$, où $I_{lum}$ représente l'intensité du signal de luminescence, $A_k$ est un paramètre d'amplitude du signal de luminescence, 0 représente l'angle d'analyse de la polarisation du signal de luminescence, $\varphi_k$ est un paramètre de déphasage du signal de luminescence par rapport à une référence de phase, $A_0$ un paramètre représentant la valeur minimum de l'intensité du signal de luminescence, $n_k$ étant un entier strictement positif, et k est un entier naturel indice de sommation allant de 1 à K, et dans lequel la donnée caractéristique estimée correspond au paramètre d'amplitude, de déphasage, de fréquence et/ou de valeur minimum, ou l'une de leurs combinaisons.

On peut par ailleurs envisager d'effectuer la détection du signal de luminescence au moyen d'une caméra, le maillage de zone spatiale prédéterminée du matériau étant alors choisi correspondant aux points du capteur de la caméra.

Dans un premier mode de réalisation du procédé, on utilise une excitation optique afin d'engendrer par photoluminescence le signal de luminescence émis par le matériau.

Dans un deuxième mode de réalisation du procédé, on utilise une excitation électrique afin d'engendrer par électroluminescence le signal de luminescence émis par le matériau.

Dans un troisième mode de réalisation du procédé, on utilise un chauffage thermique du matériau afin d'engendrer par thermoluminescence le signal de luminescence émis par le matériau.

Selon un autre aspect, il est proposé un système d'analyse de la structure cristalline d'un matériau semi-conducteur poly-cristallin, qui comprend un moyen d'excitation du matériau agencé pour exciter le matériau de manière à générer l'émission par le matériau d'un signal de luminescence, un moyen de détection, en chaque point d'un maillage d'une zone spatiale prédéterminée du matériau, du signal de luminescence suivant un angle de polarisation variable, dans une bande de fréquences de largeur supérieure ou égale à la largeur de bande interdite du matériau, ainsi qu'une unité de traitement de données, comprenant un processeur informatique couplé de manière opérationnelle à des moyens mémoire et à un module d'interface entrées/sorties, les moyens mémoire étant configurés pour stocker les données correspondant au signal détecté pour chaque point du maillage, un analyseur, s'exécutant sur le processeur informatique et configuré pour effectuer l'estimation, en chaque point du maillage de la zone spatiale prédéterminée du matériau, d'une donnée caractéristique de la modulation du signal de luminescence, modélisée par une somme de sinusoïdes, en fonction de l'angle de polarisation, à partir du signal détecté pour ledit point du maillage; et la génération d'une représentation de la donnée caractéristique sur l'ensemble des points du maillage de la zone spatiale prédéterminée.

Dans un mode de réalisation, l'analyseur du système d'analyse est en outre configuré pour effectuer l'estimation d'une donnée caractéristique en fonction d'une modélisation du signal de luminescence modulé de la forme: $I_{lum} = A_0 + \sum_{k=\{1...K\}} A_k.sin(n_k\theta + \varphi_k)$, où $I_{lum}$ représente l'intensité du signal de luminescence, $A_k$ est un paramètre d'amplitude du signal de luminescence, $0$ représente l'angle d'analyse de la polarisation du signal de luminescence, $\varphi_k$ un paramètre de déphasage du signal de luminescence par rapport à une référence de phase, $A_0$ un paramètre représentant la valeur minimum de l'intensité du signal de luminescence, $n_k$ étant un entier strictement positif, et k est un entier indice de sommation allant de 1 à K, et dans lequel la donnée caractéristique estimée correspond au paramètre d'amplitude, de déphasage, de fréquence et/ou de valeur minimum, ou l'une de leurs combinaisons.

Selon un mode de réalisation, le moyen de détection du système d'analyse comprend une caméra, le maillage de zone spatiale prédéterminée du matériau étant alors avantageusement choisi correspondant aux points du capteur de la caméra.

Par ailleurs, le moyen d'excitation du matériau peut comprendre une source lumineuse agencée pour émettre un signal d'excitation optique de manière à générer l'émission par le matériau d'un signal de photoluminescence, ou bien une source électrique agencée pour émettre un signal électrique sur une pluralité d'électrodes disposées sur le matériau de manière à générer l'émission par le matériau d'un signal d'électroluminescence, ou encore une source thermique agencée pour chauffer le matériau de manière à générer l'émission par le matériau d'un signal de thermoluminescence.

Selon un autre aspect, il est proposé un programme d'ordinateur, chargeable dans une mémoire associée à un processeur, et comprenant des portions de code pour la mise en œuvre de certaines au moins des étapes du procédé proposé lors de l'exécution dudit programme par le processeur, ainsi qu'un ensemble de données représentant, par exemple par voie de compression ou d'encodage, ledit programme d'ordinateur.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour analyser la structure cristalline d'un matériau semi-conducteur poly-cristallin qui, lors de l'exécution desdits un ou plusieurs programmes par un ordinateur comprenant une unité de traitement couplée de manière opérationnelle à des moyens mémoire et à un module d'interface entrées/sorties, conduit l'ordinateur à effectuer l'estimation et à générer une représentation selon le procédé proposé.

D'autres particularités et avantages de la présente invention apparaîtront dans la description ci-après d'exemples de réalisation non limitatifs, en référence aux dessins annexés, dans lesquels :

- la figure 1, est un schéma illustrant une mise en œuvre du procédé proposé selon un premier mode de réalisation ;
- la figure 2, est un schéma illustrant une autre mise en œuvre du procédé proposé selon le premier mode de réalisation ;
- la figure 3, est un schéma illustrant une mise en œuvre du procédé proposé selon un deuxième mode de réalisation ;
- la figure 4, est un schéma illustrant une mise en œuvre du procédé proposé selon un troisième mode de réalisation ;
- la figure 5 représente un système informatique pour la mise en œuvre du procédé proposé ;
- la figure 6a représente un exemple de cartographie du paramètre de déphasage $\varphi_k$ obtenu selon le procédé proposé pour un échantillon à base de matériau CIGSe polycristallin ;
- la figure 6b représente un exemple de cartographie du paramètre de déphasage $\varphi_k$ obtenu selon le procédé proposé pour un échantillon à base de matériau CIGSe monocristallin.

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la description. De plus, certains composants, dispositifs, moyens, éléments ayant une même fonction peuvent être présentés avec une même référence numérique sur plusieurs figures, et la répétition de la description de ces composants, dispositifs, moyens, éléments peut être dans certains cas omise ou abrégée.

Le procédé proposé peut avantageusement être utilisé avec différents types de matériaux semi-conducteurs poly-cristallins, comme par exemple les matériaux semi-conducteurs poly-cristallins de la famille des III-V (tels que l'arsénure de gallium (GaAs), le phosphure d'indium (InP) ou l'antimoniure de gallium (GaSb)), les matériaux semi-conducteurs poly-cristallins de la famille des II-VI (tels que tellurure de cadmium (CdTe) ou un de ses alliages ou dérivés, dans lequel le cadmium peut être substitué partiellement par le zinc ou le mercure et le tellure peut être substitué partiellement par le sélénium), les alliages poly-cristallins à structure de chalcopyrite comme le CIGS, ou encore le silicium poly-cristallin. Par CIGS, on entend ici de façon générale la famille du $CuInSe_2$, ou l'un de ses alliages dérivés, dans lequel le cuivre peut être substitué par l'argent, l'Indium peut être substitué partiellement par l'aluminium ou le gallium ($(Cu(In,Ga)Se_2)$, et le sélénium peut être substitué partiellement par le soufre ou le tellure.

En outre, le procédé proposé peut avantageusement être utilisé pour l'analyse d'un échantillon comprenant un ou plusieurs matériaux semi-conducteurs poly-cristallins, ainsi que d'autres matériaux. Les différents matériaux semi-conducteurs poly-cristallins contenus dans l'échantillon pourront présenter des caractéristiques distinctes, notamment eu égard à leur structure cristalline. L'homme du métier comprendra que le procédé proposé peut être appliqué à un seul des matériaux contenus dans un échantillon analysé ou bien séquentiellement à plusieurs de ces matériaux compris dans l'échantillon analysé, les différents paramètres d'analyse selon le procédé proposé étant alors ajustés en fonction du matériau semi-conducteur poly-cristallin ciblé pour chaque analyse de structure cristalline, notamment en sélectionnant la longueur d'onde de l'excitation du matériau analysé et la longueur d'onde de détection du signal de luminescence.

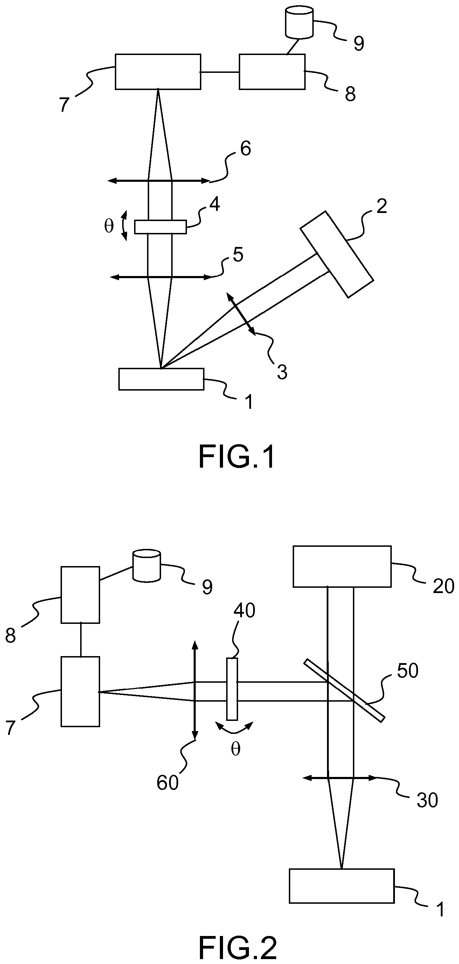

La figure 1 illustre une mise en œuvre du procédé proposé selon un premier mode de réalisation.

La figure 1 montre un échantillon (1) de matériau semi-conducteur poly-cristallin à analyser, ainsi qu'une source lumineuse (2) agencée pour émettre en direction de l'échantillon (1) un signal optique d'excitation. Ce signal optique d'excitation est adapté de manière à générer l'émission par l'échantillon (1) d'un signal de luminescence. La source lumineuse (2) est donc choisie avec une gamme spectrale qui correspond à une région d'absorption du matériau analysé. La source lumineuse (2) peut par exemple être une source laser, ou bien une source lumineuse incohérente.

Le signal d'excitation généré par la source est local, en ce sens qu'il n'excite qu'une portion de l'échantillon à analyser. On peut pour obtenir cette excitation locale utiliser des moyens de focalisation d'un faisceau d'excitation produit par la source laser, comme par exemple une lentille de focalisation (3) placée entre la source laser (2) et l'échantillon (1) à analyser. La longueur focale de la lentille de focalisation est en pratique choisie en fonction de la résolution d'analyse souhaitée et de la source lumineuse utilisée. Par exemple, pour un échantillon en matériau poly-cristallin CIGS, un objectif de microscope de focale 4mm et d'ouverture numérique 0.8 peut être utilisé afin d'obtenir une excitation locale d'une surface plus petite que la taille des cristaux, soit $1\mu m$. Le faisceau laser d'excitation est absorbé par l'échantillon (1), et une partie de l'énergie du signal d'excitation optique est dissipée sous la forme d'un signal de photoluminescence émis spontanément par le matériau excité.

La focalisation du faisceau laser d'excitation dans ce mode de réalisation permettant une résolution spatiale centimétrique à sub-micrométrique dans l'excitation locale de l'échantillon (1), on peut définir un maillage pour les besoins de cette phase d'acquisition de données avec une résolution correspondante. Le procédé proposé permet ainsi d'atteindre des résolutions spatiales importantes (typiquement de 0,5 à $10\mu m$), répondant par exemple au besoin pour l'étude des cellules solaires microcristallines.

L'échantillon (1) étant constitué d'un matériau semi-conducteur, il présente un premier niveau d'énergie (correspondant à une bande d'énergie dite « bande de conduction ») et un deuxième niveau d'énergie (correspondant à une bande d'énergie dite « bande de valence »). Les transitions d'énergie des électrons s'effectuent principalement entre l'état de la bande de conduction et celui de la bande de valence. La bande de valence et la bande de conduction sont séparées par une différence d'énergie $E_{gap}$ dite « gap », à laquelle on associe une bande d'énergie dite « bande interdite ». Cette différence d'énergie est aussi appelée énergie de bande interdite. Lorsque les photons émis par la source lumineuse ont une énergie inférieure au gap $E_{gap}$, l'énergie transmise aux électrons de la bande de valence est insuffisante à les promouvoir vers la bande de conduction, et ils ne quittent pas la bande de valence. Le matériau, excité avec une énergie inférieure à la différence $E_{gap}$, est alors transparent. Par contre, lorsque les photons émis par la source lumineuse ont une énergie supérieure à la différence d'énergie $E_{gap}$, ils excitent certains des électrons du matériau avec une énergie suffisante pour être promu de la bande de valence vers la bande de conduction, en créant une paire électron-trou (le « trou » étant une référence à l'absence dans la bande de valence de l'électron qui est passé dans la bande de conduction). Les paires électron-trou ainsi créées se recombinent et émettent des photons selon le phénomène de photoluminescence. L'énergie des photons émis est proche de l'énergie de bande interdite.

L'énergie de bande interdite est une caractéristique du matériau de l'échantillon (1) (d'une valeur de 1,1 eV pour le silicium, de 1.12 eV pour le matériau CIGS $CuInSe_2$, et de 1.65 eV pour le matériau CIGS $CuGaSe_2$). Ainsi, la source lumineuse (2) est adaptée pour émettre un signal d'énergie supérieure à la différence d'énergie $E_{gap}$ entre la bande de valence et la bande de conduction qui est propre au matériau de l'échantillon (1). Par exemple, pour un échantillon contenant un matériau semiconducteur polycristallin de type CuInGaSe2 (CIGS) ayant un gap à 1.12eV, on pourra choisir un laser monomode à 2.33eV (532nm) comme source d'excitation (2).

Le signal de lumière émis par photoluminescence est ensuite détecté et enregistré pour différentes valeurs d'orientation de polarisation lors d'une phase d'acquisition de données.

La détection du signal de luminescence est effectuée dans une bande de fréquences de largeur supérieure ou égale à la largeur de bande interdite du matériau analysé. Cet ajustement de la bande de fréquence de détection du signal de luminescence à la caractéristique de largeur de bande interdite du matériau ciblé pour l'analyse permet de recueillir des informations sur la structure cristalline du matériau analysé. On effectue ainsi la détection pour des longueurs d'onde qui sont caractéristiques de la matrice cristalline du matériau analysé.

La détection du signal de photoluminescence peut par exemple être effectuée avec deux lentilles de détection (comme illustré sur la figure 1, avec les lentilles de détection (5) et (6)), l'échantillon étant agencé sensiblement dans le plan focal objet de la première lentille. L'un des avantages de ce schéma est la possibilité de placer le polariseur (4) entre les deux lentilles de détection (5)(6). Le signal de photoluminescence est ensuite détecté en sortie de l'optique de détection (5)(6) par un détecteur (7), qui peut par exemple être choisi de type photomultiplicateur, afin d'obtenir le niveau de précision et de sensibilité souhaité. Par exemple, dans le cas de l'échantillon de type CIGS précité, on peut choisir comme détecteur un photomultiplicateur de type InGaAs ayant une réponse spectrale optimale dans le proche infrarouge (1000nm>λ>1200nm). En variante, on peut utiliser comme détecteur (7) pour la mise en œuvre du procédé proposé, un spectromètre, qui permettra, outre l'acquisition de données représentant l'intensité du signal de luminescence, l'acquisition de données représentant une distribution en fréquence (longueur d'onde) de l'intensité du signal de luminescence.

L'acquisition de données s'effectue donc par détection, en chaque point d'un maillage d'une zone spatiale prédéterminée du matériau, du signal de luminescence pour différentes valeurs d'orientation de polarisation, ce qui permet l'analyse du signal de luminescence pour différentes valeurs d'orientation de la polarisation de ce signal. Le paragraphe suivant décrit deux exemples de méthode d'analyse de polarisation du signal de luminescence.

Selon une première méthode, on effectue des mesures sur le signal de luminescence pour plusieurs valeurs d'orientation d'un polariseur linéaire adapté à la région de luminescence de l'échantillon, placé entre l'échantillon à analyser et l'optique de détection, que l'on fait tourner.

Selon une deuxième méthode, on effectue des mesures sur le signal de luminescence pour plusieurs valeurs d'orientation de polarisation en faisant tourner une lame à retard d'onde (de type λ/2) placée devant un polariseur.

On procède ainsi, en chaque point du maillage, à la détection et à l'enregistrement du signal de luminescence pour plusieurs valeurs d'orientation θ d'un polariseur ou d'une lame à retard d'onde en faisant varier l'angle θ d'orientation de -90° à +90°, avec un pas de l'ordre de 5°. L'intervalle de variation de l'angle θ d'orientation peut bien entendu être choisi différent, de même que le pas d'évolution de l'angle d'orientation θ, en fonction des caractéristiques du matériau analysé et de la précision d'analyse recherchée, sans pour autant sortir du cadre du procédé proposé.

On a donc au préalable défini un maillage de points d'une zone spatiale de l'échantillon à analyser. Chaque point du maillage est excité localement par la source lumineuse (2) de manière à émettre spontanément un signal de luminescence. La détection de ce signal de luminescence est effectuée sur chaque point du maillage pour différentes valeurs d'orientation θ de polarisation du signal de luminescence.

Afin d'exciter localement et d'analyser le signal de luminescence en chaque point du maillage, on déplace l'échantillon (1) dans le plan focal de la lentille de focalisation (5) à l'aide d'une table de translation. Par exemple, dans le cas précité de l'échantillon de type CIGS, on peut déplacer l'échantillon à analyser grâce à une platine piézoélectrique dite (xy).

Pour chaque point du maillage, la détection du signal de luminescence pour différentes valeurs d'orientation de polarisation s'effectue en modifiant l'angle θ du polariseur, avec un pas choisi en fonction de la résolution souhaitée (par exemple de 5°). On peut ainsi relever et enregistrer une valeur d'intensité $I_{lum}(\theta)$ du signal de luminescence pour un ensemble $(\theta_i)_{i=Nmin...Nmax}$ de valeurs discrètes d'angle du polariseur, avec $\theta_{i+1} = \theta_i + \Delta\theta$, et ce pour chaque point du maillage.

Le détecteur (7) est muni d'une mémoire pour enregistrer les données détectées, ou en variante d'une interface vers une mémoire ou une unité de traitement des données (8) munie d'une mémoire (9) pour le stockage de données.

La phase d'acquisition des données du signal de luminescence est suivie d'une phase de traitement de données, effectuée par exemple par une unité de traitement de données (8). Le traitement de données comprend la mesure à partir des données acquises par le détecteur (7) d'un ou de plusieurs paramètres d'un modèle sinusoïdal des variations de l'intensité $I_{lum}$ du signal de luminescence en fonction de l'angle $\theta$ du polariseur. Dans un mode de réalisation préféré du procédé proposé, le modèle sinusoïdal est de type $I_{lum} = A_0 + \sum_{k=\{1...K\}} A_k.sin(n_k\theta + \varphi_k)$, où $I_{lum}$ désigne l'intensité du signal de luminescence, $A_k$ est un paramètre d'amplitude du signal de luminescence, $\theta$ représente l'angle d'analyse de la polarisation du signal de luminescence, $\varphi_k$ est un paramètre de déphasage du signal de luminescence par rapport à une référence de phase, $n_k$ est un entier strictement positif, $A_0$ (offset) est un paramètre représentant la valeur minimum de l'intensité du signal de luminescence, et k est un entier indice de sommation allant de 1 à K. La valeur mesurée $I_{lum}$ désigne l'intensité du signal de luminescence après filtrage par le polariseur pour les besoins d'analyse de polarisation suivant différents angles. Dans le présent mode de réalisation où l'analyse de polarisation est effectuée par exemple au moyen d'un polariseur dont on fait varier l'angle, la variable $\theta$ correspond à l'angle du polariseur. Dans le cas où l'analyse de polarisation est effectuée par exemple au moyen d'une lame à retard d'onde placée devant un polariseur et dont on fait varier l'angle de rotation, la variable $\theta$ correspond à l'angle de rotation de la lame à retard d'onde. Dans les deux cas la variable $\theta$ correspond à l'angle d'orientation de la polarisation du signal de luminescence. On estime les paramètres $A_k$, $\varphi_k$, $n_k$ et/ou $A_0$ (offset) en comparant le modèle sinusoïdal aux différentes valeurs mesurées acquises pour chaque point du maillage. En mettant en correspondance les données acquises pour chaque point du maillage avec le modèle sinusoïdal, on extrait une estimation des valeurs des paramètres de ce modèle qui correspond le mieux aux données acquises. On obtient ainsi, à l'issue de cette phase de traitement de données, une estimation d'un ou plusieurs paramètres du modèle sinusoïdal, et ce pour chaque point du maillage.

On peut alors, en restant dans le cadre du procédé proposé, combiner les estimations obtenues pour obtenir l'estimation d'une combinaison de ces paramètres.

K est un entier naturel supérieur ou égal à un, qui pourra être choisi par exemple égal à un, ou à deux, ou bien supérieur à deux en fonction de la précision de modélisation recherchée pour les besoins de l'analyse de structure cristalline.

On peut aussi procéder de manière itérative, afin de déterminer la plus petite valeur de K pour laquelle le modèle obtenu permet un ajustement avec les données expérimentales satisfaisant. Ce processus itératif de pas $\Delta_K$ de sélection d'une valeur optimale pour K peut être poursuivi jusqu'à ce que la valeur $K+\Delta_K$ conduit à un modèle théorique moins satisfaisant du point de vue de l'ajustement aux données expérimentales recueillies que la valeur précédente K.

L'ajustement (on parle aussi parfois de « modélisation numérique », et en anglais, de « fitting ») du modèle théorique choisi (dans l'exemple décrit un modèle sinusoïdal de type $I_{lum} = A_0 + \sum_{k=\{1...K\}} A_k.sin(n_k\theta + \varphi_k)$ aux données acquises expérimentalement s'effectue selon des méthodes de corrélation, par exemple la méthode des moindres carrés ou la méthode d'ajustement de Mayer, afin d'en extraire une estimation avec la précision souhaitée du/des paramètres recherchés. La finesse de la résolution de l'acquisition de données (en particulier la valeur choisie pour le pas $\Delta\theta$ de variation de l'angle $\theta$ du polariseur) en chaque point permettra un ajustement plus ou moins rapide et précis pour l'estimation du/des paramètre(s) du modèle choisi.

L'ajustement du modèle théorique choisi aux données acquises expérimentalement et l'estimation du/des paramètre(s) du modèle choisi étant effectuée en chaque point du maillage prédéfini de la zone spatiale du matériau (1), on peut alors générer une représentation pour l'ensemble des points du maillage des valeurs estimées pour un paramètre donné, et donc une cartographie de la variation spatiale de chacun des paramètres ou de combinaisons de ces derniers.

Dans l'exemple considéré du modèle sinusoïdal de type $I_{lum} = A_0 + \sum_{k=\{1...K\}} A_k.sin(n_k\theta + \varphi_k)$, le traitement de données peut permettre une estimation de valeur du paramètre d'amplitude ($A_k$), de valeur du paramètre de déphasage ($\varphi_k$), de valeur du paramètre de fréquence ($n_k$), et/ou de valeur du paramètre de valeur minimale $A_0$ (offset), ou d'une combinaison de plusieurs de ces paramètres, et ce pour chaque point du maillage, ce qui permet de dresser une cartographie du paramètre d'amplitude ($A_k$), du paramètre de déphasage ($\varphi_k$), du paramètre de fréquence ($n_k$) et/ou du paramètre de valeur minimale $A_0$ (offset), ou d'une combinaison de plusieurs de ces paramètres.

Plus spécifiquement, on observe avec le modèle proposé à titre d'exemple $I_{lum} = A_0 + \sum_{k=\{1...K\}} A_k.sin(n_k\theta + \varphi_k)$, pour un matériau de CIGS polycristallin une corrélation entre les paramètres $\varphi_k$ et $A_k$ et les propriétés locales d'orientation de la structure cristalline.

Ces représentations de répartition spatiale de l'évolution du signal de luminescence en fonction de l'angle du polariseur, pour chacun des paramètres, permettent d'isoler différentes propriétés structurales du matériau analysé en fonction du paramètre représenté. Par exemple, l'amplitude $A_k$ et le déphasage $\varphi_k$ peuvent être corrélés à l'orientation des axes cristallins du matériau analysé. Ces paramètres peuvent également être reliés à la présence de défauts cristallins dans le matériau étudié.

En outre, on peut avoir recours, afin d'obtenir une orientation absolue des axes cristallins du matériau, à une calibration du dispositif expérimental. On pourra utiliser pour ce faire un échantillon monocristallin dont l'orientation cristalline a été préalablement déterminée par une méthode d'analyse telle que la diffraction par rayon X. On reliera alors les paramètres d'analyse à ladite orientation cristalline du matériau de calibration.

Dans le cas de l'échantillon CIGS microcristallin, on observe une disparité spatiale de l'intensité de photoluminescence sans corrélation évidente avec une orientation cristalline. Cependant, la représentation en cartographie du paramètre $\varphi_k$ révèle, par exemple, une mosaïcité correspondante à des zones spatiales de quelques $\mu m^2$, taille des grains du matériau analysé. Par ailleurs, sur un échantillon CIGS monocristallin, aucune variation spatiale des paramètres d'ajustement n'est observée. Ceci permet de mieux apprécier le fait que les procédés proposés ici permettent entre autres de révéler le caractère polycristallin du matériau et l'identification des cristaux.

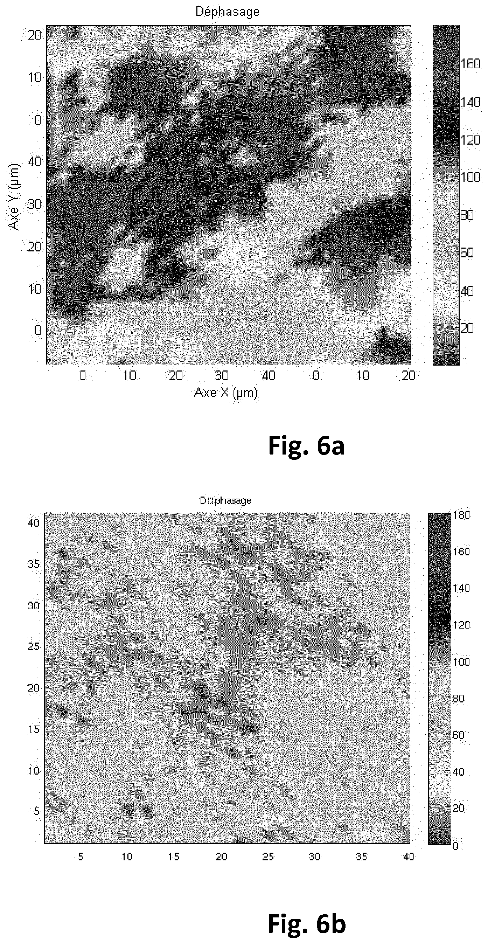

La figure 6a représente un exemple de cartographie du paramètre de déphasage $\varphi_k$ obtenu selon le procédé proposé pour un échantillon à base de matériau $CuIn1-xGaxSe2$ (CIGSe) polycristallin sur laquelle on distingue des zones spatiales correspondant à la structure cristalline de l'échantillon. Le contraste avec la cartographie représentée sur la figure 6b est apparent, la figure 6b représentant un exemple de cartographie du paramètre de déphasage $\varphi_k$ obtenu selon le procédé proposé pour un échantillon à base de matériau CIGSe monocristallin. La structure monocristalline de l'échantillon analysé sur la figure 6b est révélée par l'uniformité de la cartographie de paramètre de déphasage, uniformité que l'on n'observe pas sur la cartographie de la figure 6a.

Ce procédé d'analyse par photoluminescence avec excitation locale permet d'atteindre des résolutions spatiales très fines, typiquement inférieures à 1 $\mu m$, sans que cela interdise toutefois de travailler à des résolutions plus grandes, par exemple millimétriques, ou bien, de manière typique, correspondant à une surface d'analyse sur le matériau de l'ordre de 100$\mu m^2$. La dimension d'un grain dans un CIGS poly-cristallin étant par exemple typiquement de l'ordre du $\mu m$, la résolution accessible ouvre le champ à l'analyse de matériaux microcristallins tels que le CIGS, filière photovoltaïque couche mince en plein essor. Il convient en outre bien à l'analyse (que ce soit aux fins de caractérisation du matériau ou de détection de défauts pour l'application envisagée) des couches minces de matériaux, d'une épaisseur typiquement inférieure à 3 $\mu m$, et utilisées dans les produits photovoltaïques, qui peuvent présenter en surface une structure cristalline aux dimensions micrométriques (sans que ce soit toutefois nécessairement toujours le cas). On peut ainsi caractériser avec une grande précision des couches minces de cellules photovoltaïques, pendant le processus de croissance de couche, pour s'assurer par exemple que la croissance de la couche est réalisée avec les propriétés d'orientation de la structure cristalline recherchées.

L'unité de traitement des données (8) peut être un ordinateur, un réseau d'ordinateurs, ou un autre appareil comportant un processeur, une mémoire, une unité de stockage de données (9), et d'autres éléments matériels associés comme une interface de réseau et un lecteur de support pour lire et écrire un support de stockage amovible (non représentés sur la figure). Le support de stockage amovible peut être, par exemple, un disque compact (CD), un disque vidéo/polyvalent numérique (DVD), un disque flash, etc. Le support de stockage amovible contient des instructions qui, lorsqu'elles sont exécutées par l'unité de traitement des données (8), amènent l'unité de traitement des données (8) à effectuer la partie acquisition et/ou traitement de données des exemples de mise en œuvre du procédé proposé décrits dans les présentes. Le support de stockage amovible peut comprendre des instructions pour mettre en œuvre et pour exécuter un moteur d'analyse (ou analyseur) configuré pour effectuer la phase de traitement de données. Certaines parties du moteur d'analyse peuvent être stockées en tant qu'instructions sur une instance donnée du support de stockage amovible, un dispositif amovible ou un stockage de données local (9), à charger dans la mémoire pour être exécutées par le processeur. Spécifiquement, des instructions logicielles ou un code de programme lisible par ordinateur pour effectuer des modes de réalisation peuvent être stockés, provisoirement ou en permanence, en intégralité ou en partie, sur un support lisible par ordinateur non transitoire comme un disque compact (CD), un dispositif de stockage local ou distant, une mémoire locale ou distante, une disquette, ou n'importe quel autre dispositif de stockage lisible par ordinateur.

Bien que le moteur d'analyse soit décrit sous forme de programme résidant dans la mémoire, le moteur d'analyse peut être mis en œuvre sous forme matérielle, comme un circuit intégré spécifique application (ASIC), ou sous forme d'une combinaison d'éléments matériels et logiciels.

La figure 2 montre une variante de mise en œuvre du procédé proposé selon le premier mode de réalisation, dans laquelle on utilise un miroir dichroïque.

L'échantillon (1) de matériau semi-conducteur poly-cristallin à analyser est excité par un signal d'excitation émis par une source lumineuse (20) (par exemple un laser monomode transverse) et focalisé sur le point d'analyse par une lentille de focalisation (30). Ce signal optique d'excitation est adapté de manière à générer l'émission par l'échantillon (1) d'un signal de luminescence. Il est en outre adapté pour traverser un miroir dichroïque (50) placé entre la source lumineuse et la lentille de focalisation (30). La source lumineuse (20) peut par exemple être une source laser, ou bien une source lumineuse incohérente.

Le signal de photoluminescence est dirigé vers le détecteur (7) au moyen de l'optique de détection (30), (50) et (60). En particulier, le miroir dichroïque (50) est adapté et positionné de manière à séparer le signal de photoluminescence du signal d'excitation. Un polariseur (40) est placé entre le miroir (50) et la deuxième lentille (60) de détection, afin de pouvoir analyser le signal de photoluminescence pour différentes valeurs d'orientation $\theta$ du polariseur.

Cette variante de mise en œuvre du procédé proposé utilisant un miroir dichroïque permet en outre d'utiliser une autre méthode d'excitation locale et d'analyse du signal de luminescence en chaque point du maillage que celle exposée ci-dessus. On peut en effet, comme alternative à l'utilisation d'une table de translation, déplacer le faisceau d'excitation laser à l'aide de miroirs orientables (par exemple de type piézoélectrique) placés entre les optiques de détection/excitation et la lentille de focalisation (30).

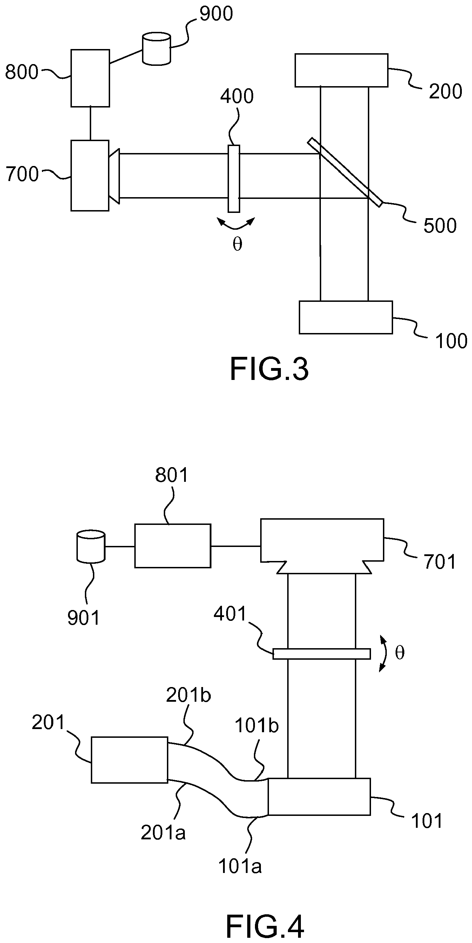

La figure 3 illustre une mise en œuvre du procédé proposé selon un deuxième mode de réalisation.

La figure 3 montre un échantillon (100) de matériau semi-conducteur poly-cristallin à analyser, ainsi qu'une source lumineuse (200) agencée pour émettre en direction de l'échantillon (100) un signal optique d'excitation. Ce signal optique d'excitation est adapté de manière à générer l'émission par l'échantillon (100) d'un signal de luminescence. La source lumineuse (200) est donc choisie avec une gamme spectrale qui correspond à une région d'absorption du matériau analysé. La source lumineuse (200) peut par exemple être une source laser, ou bien une source lumineuse incohérente.

Le signal d'excitation généré par la source est global, en ce sens qu'il excite la quasi-totalité ou la totalité de la surface de la zone à analyser. Il n'est donc pas fait usage dans ce mode de réalisation du procédé proposé de moyens de focalisation du signal d'excitation pour n'exciter localement qu'une zone donnée de la surface du matériau à analyser. Comme dans le mode de réalisation expliqué ci-dessus, la source lumineuse (200) est adaptée pour émettre un signal d'énergie supérieure à la différence d'énergie $E_{gap}$ entre la bande de valence et la bande de conduction qui est propre au matériau de l'échantillon (100).

Ainsi, dans ce mode de réalisation, l'échantillon est excité de manière globale et l'image de la luminescence est enregistrée par le biais d'une caméra (700), de préférence numérique.

La détection du signal de photoluminescence peut par exemple être effectuée comme illustré sur la figure 3 en plaçant un miroir dichroïque (500) adapté et positionné de manière à réfléchir le signal de photoluminescence. Un polariseur (400), dont on fait varier l'orientation, est placé devant la caméra (700), de manière à ce que celle-ci détecte le signal de photoluminescence filtré par le polariseur (400), et ce pour différentes orientations du polariseur (400). Le signal de photoluminescence est ensuite détecté par la caméra (700), qui pourra par exemple être choisie de type CCD. D'autres types de caméras, comme par exemple des caméras à détection infra-rouge (IR), utilisant la technologie InGaAs, ou bien des caméras à détecteur CMOS, pourront aussi être utilisés pour la mise en œuvre de ce mode de réalisation du procédé proposé.

La caméra (700) est choisie apte à, et est configurée de manière à effectuer la détection du signal de luminescence dans une bande de fréquences de largeur supérieure ou égale à la largeur de bande interdite du matériau analysé. On effectue dans ce mode de réalisation au moyen d'une caméra la détection pour des longueurs d'onde qui sont caractéristiques de la matrice cristalline du matériau analysé.

A l'instar des modes de réalisation précédemment décrits, l'acquisition de données s'effectue par détection en chaque point d'un maillage d'une zone spatiale prédéterminée du matériau du signal de luminescence pour différentes valeurs d'orientation de polarisation, à ceci près que le maillage peut avantageusement être choisi dans cet exemple de mode de réalisation correspondant aux points du capteur de la caméra (700).

On procède ainsi à la détection et à l'enregistrement de l'image captée par la caméra (700) (en chaque point du maillage), l'image étant générée par la détection du signal de luminescence, pour plusieurs valeurs d'orientation $\theta$ du polariseur (400) en faisant varier l'angle $\theta$ d'orientation de -90° à +90°, avec un pas de l'ordre de 5°. L'intervalle de variation de l'angle $\theta$ d'orientation du polariseur peut bien entendu être choisi différent, de même que le pas d'évolution de l'angle d'orientation $\theta$, en fonction des caractéristiques du matériau analysé et de la précision d'analyse recherchée, sans pour autant sortir du cadre du procédé proposé.

On notera que les exemples de méthodes d'analyse de polarisation du signal de luminescence décrites ci-dessus (variation de l'orientation d'un polariseur linéaire ou variation de l'orientation d'une lame à retard d'onde placée devant un polariseur) sont applicables au présent mode de réalisation de procédé proposé.

Pour chaque point du maillage, la détection du signal de luminescence pour différentes valeurs d'orientation de polarisation s'effectue donc par exemple en modifiant l'angle $\theta$ du polariseur, avec un pas choisi en fonction de la résolution souhaitée (par exemple de 5°). On peut ainsi relever et enregistrer un ensemble d'images correspondant au signal de luminescence pour un ensemble $(\theta_i)_{i=Nmin...Nmax}$ de N valeurs discrètes d'angle du polariseur, avec $\theta_{i+1} = \theta_i + \Delta\theta$.

Dans un exemple de mise en œuvre du procédé proposé selon ce deuxième mode de réalisation, on dispose un imageur hyperspectral devant la caméra (700), de manière à acquérir, outre des données représentant l'intensité du signal de luminescence, des données représentant une distribution en fréquence de l'intensité du signal de luminescence.

Les données acquises se trouvent sous la forme d'un ensemble de N images $(Im_i)_{i=1...N}$, chacune correspondant au signal de photoluminescence émis par le matériau analysé sur une zone d'analyse du matériau prédéterminée, pour une valeur $\theta_i$ d'orientation de polarisation.

La caméra (700) est munie d'une mémoire pour enregistrer les images détectées, et est connectée au moyen d'une interface d'échange de données à une unité de traitement des données (800) qui est elle aussi munie d'une mémoire (900) pour le stockage de données.

La phase d'acquisition des données du signal de luminescence est suivie d'une phase de traitement de données, effectuée par exemple par une unité de traitement de données (800), qui comprend la mesure sur les données acquises d'un ou de plusieurs paramètres d'un modèle sinusoïdal des variations de l'intensité $I_{lum}$ du signal de luminescence en fonction de l'orientation $\theta$ de polarisation. Le traitement de données effectué par l'unité de traitement de données (800) correspond à celui décrit ci-dessus dans le cadre de la mise en œuvre du procédé proposé selon le premier mode de réalisation.

Ce procédé d'analyse par photoluminescence avec excitation globale constitue un compromis avantageux entre rapidité d'exécution, simplicité de mise en œuvre et finesse d'analyse. Bien que l'excitation globale ne permette pas d'atteindre des résolutions aussi fines que l'excitation locale, elle offre une rapidité et une simplicité de mise en œuvre qui la rend particulièrement bien adaptée à sa mise en œuvre au sein d'un processus de fabrication en série. En outre, à l'instar du procédé précédemment exposé, ce procédé d'analyse par photoluminescence avec excitation globale peut être mis en œuvre en cours de fabrication, par exemple en phase de croissance de couche pour un produit photovoltaïque, ce qui permet de détecter à un stade avancé de la fabrication certains défauts, corrigeables ou non, et d'éviter ainsi d'importants coûts de fabrication.

La figure 4 illustre une mise en œuvre du procédé proposé selon un troisième mode de réalisation.

La figure 4 montre un échantillon de cellule photovoltaïque (101) comprenant un matériau semi-conducteur poly-cristallin à analyser, ainsi qu'un générateur de courant électrique (201) dont les sorties (201a ; 201b) sont reliées électriquement aux électrodes (101a ; 101b) de la cellule (101). Le signal électrique délivré par le générateur (201) est adapté de manière à générer l'émission par la cellule photovoltaïque (101) d'un signal d'électroluminescence.

Le signal électrique d'excitation est adapté de manière à ce que le matériau semi-conducteur poly-cristallin de la cellule (101) soit excité pour émettre spontanément un signal d'électro-luminescence sur la totalité de la surface de matériau excitée. En particulier, la source électrique (201) est adaptée pour générer un signal d'excitation électrique d'énergie supérieure à la différence d'énergie $E_{gap}$ entre la bande de valence et la bande de conduction qui est propre au matériau semi-conducteur poly-cristallin de la cellule (101) à analyser.

Les étapes suivantes du procédé proposé décrites ci-dessus (ainsi que leurs variantes) dans le cadre d'une excitation par un signal optique sont applicables au présent mode de réalisation qui prévoit la génération d'un signal d'électroluminescence.

Par exemple, et comme illustré sur la figure 4, on peut enregistrer le signal d'électroluminescence émis par le matériau par le biais d'une caméra (701), de préférence numérique. On peut en outre placer devant la caméra (701) un polariseur (401), dont on fait varier l'orientation, de manière à ce que la caméra (701) détecte le signal d'électroluminescence pour différentes orientations de polarisation, tel que décrit ci-dessus. Le signal d'électroluminescence est ensuite détecté par la caméra (701), qui pourra par exemple être choisie de type CCD. D'autres types de caméras, comme par exemple des caméras à détection infra-rouge (IR), utilisant la technologie InGaAs, ou bien des caméras à détecteur CMOS, pourront aussi être utilisés pour la mise en œuvre de ce mode de réalisation du procédé proposé.

Là encore, la caméra (701) est choisie apte à, et est configurée de manière à effectuer la détection du signal de luminescence dans une bande de fréquences de largeur supérieure ou égale à la largeur de bande interdite du matériau analysé. On effectue dans ce mode de réalisation au moyen d'une caméra la détection pour des longueurs d'onde qui sont caractéristiques de la matrice cristalline du matériau analysé.

La détection du signal d'électroluminescence, l'acquisition des données du signal d'électroluminescence et le traitement des données acquises peuvent s'effectuer selon les étapes correspondantes de l'un des modes de réalisation décrits précédemment pour un signal de photoluminescence. Ce procédé d'analyse par électroluminescence est particulièrement bien adapté à l'analyse des cellules photovoltaïques une fois fabriquées, notamment dans le cadre de tests de qualité de fabrication et de conformité aux performances attendues.

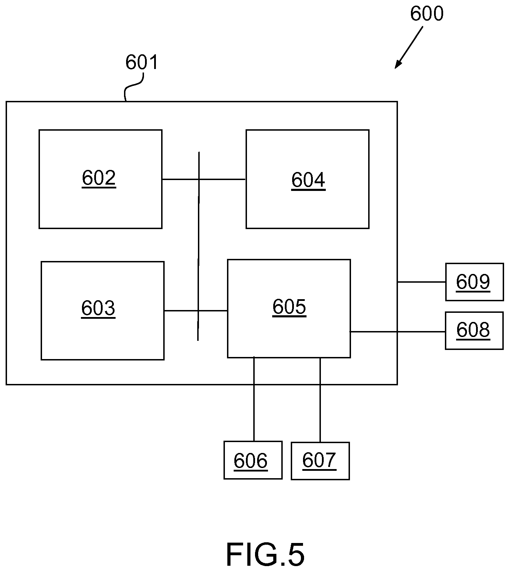

Des modes de réalisation d'analyse de la structure cristalline d'un matériau semi-conducteur poly-cristallin peuvent être, au moins pour partie, mis en œuvre sur pratiquement n'importe quel type d'ordinateur, indépendamment de la plate-forme utilisée. Par exemple, comme cela est représenté sur la figure 5, un système informatique (600), qui peut correspondre aux unités de traitement de données (8)(800) et mémoires (9) (900) représentés sur les figures 1 à 4 ou être couplé de manière opérationnelle à ces éléments, comprend une unité de traitement de données (601), qui comprend un ou plusieurs processeurs (602), comme une unité centrale (CPU) ou un autre processeur matériel, une mémoire associée (603) (par exemple, une mémoire vive (RAM), une mémoire cache, une mémoire flash, etc.), un dispositif de stockage (604) (par exemple, un disque dur, un disque optique comme un CD ou un DVD, une clé de mémoire flash, etc.), et de nombreux autres éléments et fonctionnalités typiques des ordinateurs actuels (non représentés).

L'unité de traitement de données (601) comprend également un module d'interface entrées/sorties (605) qui pilote les différentes interfaces entre l'unité (601) et des moyens d'entrée et/ou de sorties du système (600). Le système (600) peut en effet également comprendre des moyens d'entrée, comme un clavier (606), une souris (607), ou un microphone (non représenté). En outre, l'ordinateur (600) peut comprendre des moyens de sortie, comme un moniteur (608) (par exemple, un moniteur d'affichage à cristaux liquides (LCD), un moniteur d'affichage plasma ou un moniteur à tube cathodique (CRT)). Le système informatique (600) peut être relié à un réseau (609) (par exemple, un réseau local (LAN), un réseau étendu (WAN) comme Internet, ou n'importe quel autre type similaire de réseau) par l'intermédiaire d'une connexion d'interface de réseau (non représentée). L'homme du métier peut se rendre compte qu'il existe de nombreux types différents de systèmes informatiques (par exemple, un ordinateur de bureau, un ordinateur portable, ou n'importe quel autre système informatique capable d'exécuter des instructions lisibles par ordinateur), et les moyens d'entrée et de sortie susmentionnés peuvent prendre d'autres formes, actuellement connues ou développées ultérieurement.

En général, le système informatique (600) comprend au moins les moyens minimaux de traitement, d'entrée et/ou de sortie nécessaires pour mettre en pratique un ou plusieurs modes de réalisation du procédé d'analyse proposé. Par exemple, le processeur (602) est apte à être configuré pour exécuter un programme d'ordinateur comprenant des portions de code pour la mise en œuvre d'un analyseur, configuré pour effectuer l'estimation d'une ou de plusieurs données caractéristiques de la modulation du signal de luminescence et la génération d'une représentation de la donnée caractéristique selon les différents mode de réalisation du procédé d'analyse proposé. Le dispositif de stockage (604) sera choisi de préférence apte à stocker les données correspondant au signal détecté pour chaque point du maillage.

Bien que l'analyseur configuré pour effectuer l'estimation et la génération de la représentation soit décrit sous la forme d'un logiciel, il peut être mis en œuvre sous forme matérielle ou sous forme d'une combinaison de matériel et d'instructions logicielles.

Le système informatique (600) est en outre avantageusement couplé de manière opérationnelle au détecteur du signal de luminescence de manière à stocker en mémoire les données acquises en vue de leur traitement selon le procédé d'analyse proposé par le système informatique (600). En variante, on peut aussi prévoir le stockage en mémoire (604) des données à traiter par tout moyen connu n'impliquant pas nécessairement une connexion directe entre le détecteur utilisé pour la détection du signal de luminescence et le système informatique (600).

En outre, l'homme du métier peut se rendre compte qu'un ou plusieurs éléments du système informatique (600) susmentionné peuvent se trouver à un emplacement distant et être reliés à d'autres éléments sur un réseau. De plus, un ou plusieurs modes de réalisation peuvent être mis en œuvre sur un système distribué comportant une pluralité de nœuds, où chaque portion de la mise en œuvre (par exemple, divers composants de l'outil d'analyse à deux domaines) peut être située sur un nœud différent à l'intérieur du système distribué. Dans un ou plusieurs modes de réalisation, le nœud correspond à un système informatique. En variante, le nœud peut correspondre à un processeur avec une mémoire physique associée. Le nœud peut également correspondre à un processeur avec une mémoire partagée et/ou des ressources partagées. En outre, des instructions logicielles pour effectuer un ou plusieurs modes de réalisation peuvent être stockées sur un support lisible par ordinateur comme un disque compact (CD), une disquette, une bande, ou n'importe quel autre dispositif de stockage lisible par ordinateur.

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que l'analyse de structure cristalline d'un matériau semi-conducteur poly-cristallin ait été décrite par rapport à un nombre limité de modes de réalisation, l'homme du métier ayant pris connaissance du présent mémoire peut se rendre compte que d'autres modes de réalisation peuvent être envisagés sans sortir du périmètre de l'analyse de structure cristalline d'un matériau semi-conducteur poly-cristallin tel que décrit dans les présentes. Le périmètre de l'analyse de structure cristalline d'un matériau semi-conducteur poly-cristallin n'est limité que par les revendications annexées.

## Revendications

1.  Procédé d'analyse de la structure cristalline d'un matériau semi-conducteur poly-cristallin comprenant :

    - l'excitation du matériau de manière à générer l'émission par le matériau d'un signal de luminescence ;
    - en chaque point d'un maillage d'une zone spatiale prédéterminée du matériau, la détection du signal de luminescence suivant un angle de polarisation variable, dans une bande de fréquences de largeur supérieure ou égale à la largeur de bande interdite du matériau ;
- l'estimation, en chaque point du maillage de la zone spatiale prédéterminée du matériau, d'une donnée caractéristique de la modulation du signal de luminescence, modélisée par une somme de sinusoïdes, en fonction de l'angle de polarisation, à partir du signal détecté pour ledit point du maillage ;
- la génération d'une représentation de la donnée caractéristique sur l'ensemble des points du maillage de la zone spatiale prédéterminée.

2. Procédé selon la revendication 1, dans lequel la modélisation du signal de luminescence modulé est de la forme : $I_{lum} = A_0 + \sum_{k=\{1...K\}}A_k.sin(n_k\theta + \varphi_k)$, où $I_{lum}$ représente l'intensité du signal de luminescence, $A_k$ est un paramètre d'amplitude du signal de luminescence, $\theta$ représente l'angle d'analyse de la polarisation du signal de luminescence, $\varphi_k$ est un paramètre de déphasage du signal de luminescence par rapport à une référence de phase, $A_0$ un paramètre représentant la valeur minimum de l'intensité du signal de luminescence, $n_k$ étant un entier strictement positif, et k est un entier naturel indice de sommation allant de 1 à K, et dans lequel la donnée caractéristique estimée correspond au paramètre d'amplitude, de déphasage, de fréquence et/ou de valeur minimum, ou l'une de leurs combinaisons.

3. Procédé selon l'une quelconque des revendications précédentes, dans lequel la détection du signal de luminescence est effectuée au moyen d'une caméra (700), le maillage de zone spatiale prédéterminée du matériau étant choisi correspondant aux points du capteur de la caméra.

4. Procédé selon l'une quelconque des revendications 1 à 3, dans lequel l'excitation du matériau comprend l'excitation optique du matériau par une source lumineuse (2, 200) de manière à générer l'émission par le matériau d'un signal de photoluminescence.

5. Procédé selon l'une quelconque des revendications 1 à 3, dans lequel l'excitation du matériau comprend l'excitation électrique du matériau par une source électrique sur une pluralité d'électrodes disposées sur le matériau de manière à générer l'émission par le matériau d'un signal d'électroluminescence.

6. Procédé selon l'une quelconque des revendications 1 à 3, dans lequel l'excitation du matériau comprend le chauffage du matériau par une source thermique de manière à générer l'émission par le matériau d'un signal de thermoluminescence.

7. Système d'analyse de la structure cristalline d'un matériau semi-conducteur poly-cristallin, comprenant :

- un moyen d'excitation du matériau agencé pour exciter le matériau de manière à générer l'émission par le matériau d'un signal de luminescence ;
- un moyen de détection (7, 700), en chaque point d'un maillage d'une zone spatiale prédéterminée du matériau, du signal de luminescence suivant un angle de polarisation variable, dans une bande de fréquences de largeur supérieure ou égale à la largeur de bande interdite du matériau ;
- une unité de traitement de données (8, 800, 601), comprenant
- un processeur informatique (602) couplé de manière opérationnelle à des moyens mémoire (9, 900, 604) et à un module d'interface entrées/sorties, les moyens mémoire étant configurés pour stocker les données correspondant au signal détecté pour chaque point du maillage ;
- un analyseur, s'exécutant sur le processeur informatique et configuré pour effectuer :

- l'estimation, en chaque point du maillage de la zone spatiale prédéterminée du matériau, d'une donnée caractéristique de la modulation du signal de luminescence, modélisée par une somme de sinusoïdes, en fonction de l'angle de polarisation, à partir du signal détecté pour ledit point du maillage; et
- la génération d'une représentation de la donnée caractéristique sur l'ensemble des points du maillage de la zone spatiale prédéterminée.

8. Système d'analyse selon la revendication 7, dans lequel l'analyseur est en outre configuré pour effectuer l'estimation d'une donnée caractéristique en fonction d'une modélisation du signal de luminescence modulé de la forme : $I_{lum} = A_0 + \sum_{k=\{1...K\}}A_k.sin(n_k\theta + \varphi_k)$, où $I_{lum}$ représente l'intensité du signal de luminescence, $A_k$ est un paramètre d'amplitude du signal de luminescence, $\theta$ représente l'angle d'analyse de la polarisation du signal de luminescence, $\varphi_k$ un paramètre de déphasage du signal de luminescence par rapport à une référence de phase, $A_0$ un paramètre représentant la valeur minimum de l'intensité du signal de luminescence, $n_k$ étant un entier strictement positif, et k est un entier indice de sommation allant de 1 à K, et dans lequel la donnée caractéristique estimée correspond au paramètre d'amplitude, de déphasage, de fréquence et/ou de valeur minimum, ou l'une de leurs combinaisons.

9. Système d'analyse selon l'une quelconque des revendications 7 ou 8, dans lequel le moyen de détection comprend une caméra (700), le maillage de zone spatiale prédéterminée du matériau étant choisi correspondant aux points du capteur de la caméra.

10. Système d'analyse selon l'une quelconque des revendications 7 à 9, dans lequel le moyen d'excitation du matériau comprend une source lumineuse (2, 200) agencée pour émettre un signal d'excitation optique de manière à générer l'émission par le matériau d'un signal de photoluminescence.

11. Système d'analyse selon l'une quelconque des revendications 7 à 9, dans lequel le moyen d'excitation du matériau comprend une source électrique agencée pour émettre un signal électrique sur une pluralité d'électrodes disposées sur le matériau de manière à générer l'émission par le matériau d'un signal d'électroluminescence.

12. Système d'analyse selon l'une quelconque des revendications 7 à 9, dans lequel le moyen d'excitation du matériau comprend une source thermique agencée pour chauffer le matériau de manière à générer l'émission par le matériau d'un signal de thermoluminescence.

13. Programme d'ordinateur comprenant des portions de code pour la mise en œuvre des étapes d'un procédé selon l'une quelconque des revendications 1 à 6 lors de l'exécution dudit programme par le système d'analyse selon la revendication 7.

14. Ensemble de données représentant, par exemple par voie de compression ou d'encodage, un programme d'ordinateur selon la revendication 13.

15. Support de stockage non-transitoire d'un programme exécutable par le système d'analyse selon la revendication 7, comprenant un ensemble de données représentant un ou plusieurs programmes, lesdits un ou plusieurs programmes comprenant des instructions pour analyser la structure cristalline d'un matériau semi-conducteur poly-cristallin qui, lors de l'exécution desdits un ou plusieurs programmes par le système d'analyse selon la revendication 7, conduit ledit système d'analyse à effectuer l'estimation et à générer une représentation selon le procédé d'une quelconque des revendications 1 à 6.

**Patentansprüche**

1. Verfahren zum Analysieren der Kristallstruktur eines polykristallinen Halbleitermaterials, umfassend:

- das Anregen des Materials so, dass das Material ein Lumineszenzsignal emittiert;
- an jedem Punkt eines Gitters eines vorbestimmten räumlichen Bereichs des Materials, das Detektieren des Lumineszenzsignals unter einem variablen Polarisationswinkel in einem Frequenzband mit einer Breite größer oder gleich der Bandlücke des Materials;
- an jedem Punkt des Gitters des vorbestimmten räumlichen Bereichs des Materials, das Schätzen von Daten, welche für die Modulation des Lumineszenzsignals charakteristisch sind, modelliert durch eine Summe von Sinuskurven, als Funktion des Polarisationswinkels, aus dem für diesen Punkt des Gitters detektierten Signals;
- das Erzeugen einer Darstellung der charakteristischen Daten über alle Punkte des Gitters des vorbestimmten räumlichen Bereichs.

2. Verfahren nach Anspruch 1, wobei die Modellierung des modulierten Lumineszenzsignals erfolgt durch: $I_{lum} = A_0 + \sum_{k=\{1...K\}} A_k \sin(n_k \Theta + \varphi_k)$, wobei $I_{lum}$ die Intensität des Lumineszenzsignals repräsentiert, $A_k$ ein Parameter der Amplitude des Lumineszenzsignals ist, $\Theta$ den Analysewinkel der Polarisation des Lumineszenzsignals repräsentiert, $\varphi_k$ ein Parameter der Phasenverschiebung des Lumineszenzsignals in Bezug auf eine Referenzphase ist, $A_0$ ein Parameter ist, der den Minimalwert der Intensität des Lumineszenzsignals repräsentiert, $n_k$ eine streng positive ganze Zahl ist und $k$ eine natürliche Zahl ist, welche einen Summenindex im Bereich von 1 bis K angibt, und wobei die geschätzten charakteristischen Daten dem Parameter der Amplitude, der Phasenverschiebung, der Frequenz und/oder dem Minimalwert oder einer Kombination davon entsprechen.

3. Verfahren nach einem der vorstehenden Ansprüche, wobei das Detektieren des Lumineszenzsignals mittels einer Kamera (700) durchgeführt wird, wobei das Gitter des vorbestimmten räumlichen Bereichs des Materials entsprechend den Punkten des Kamerasensors ausgewählt wird.

4. Verfahren nach einem der Ansprüche 1 bis 3, wobei das Anregen des Materials umfasst: das optische Anregen des Materials durch eine Lichtquelle (2, 200) so, dass das Material ein Photolumineszenzsignal emittiert.

5. Verfahren nach einem der Ansprüche 1 bis 3, wobei das Anregen des Materials umfasst: das elektrische Anregen des Materials durch eine elektrische Quelle über eine Vielzahl von auf dem Material angeordneten Elektroden so, dass das Material ein Elektrolumineszenzsignal emittiert.

6. Verfahren nach einem der Ansprüche 1 bis 3, wobei das Anregen des Materials umfasst: das Erwärmen des Materials durch eine Wärmequelle so, dass das Material ein Thermolumineszenzsignal emittiert.

**7.** System zur Analyse der Kristallstruktur eines polykristallinen Halbleitermaterials, umfassend:

> - ein Mittel zum Anregen des Materials, welches so angeordnet ist, dass es das Material so anregt, dass das Material ein Lumineszenzsignal emittiert;
> - ein Mittel (7, 700) zum Detektieren, an jedem Punkt eines Gitters eines vorbestimmten räumlichen Bereichs des Materials, des Lumineszenzsignals unter einem variablen Polarisationswinkel in einem Frequenzband mit einer Breite größer oder gleich der Bandlücke des Materials;
> - eine Datenverarbeitungseinheit (8, 800, 601), umfassend:
>
>> - einen Computerprozessor (602), der operativ mit Speichermitteln (9, 900, 604) und mit einem Eingangs-/Ausgangs-Schnittstellenmodul gekoppelt ist, wobei die Speichermittel so konfiguriert sind, dass sie Daten speichern, die dem Signal entsprechen, das für jeden Punkt des Gitters detektiert wurde;
>> - einen Analysator, der auf dem Computerprozessor ausgeführt wird und konfiguriert ist, auszuführen:
>>
>>> - das Schätzen, an jedem Punkt des Gitters des vorbestimmten räumlichen Bereichs des Materials, von Daten, welche für die Modulation des Lumineszenzsignals charakteristisch sind, modelliert durch eine Summe von Sinuskurven, als Funktion des Polarisationswinkels, aus dem für diesen Punkt des Gitters detektierten Signal; und
>>> - das Erzeugen einer Darstellung der charakteristischen Daten über alle Punkte des Gitters des vorbestimmten räumlichen Bereichs.

**8.** System zur Analyse nach Anspruch 7, wobei der Analysator ferner so konfiguriert ist, dass er das Schätzen von charakteristischen Daten gemäß einem Modell des modulierten Lumineszenzsignals durchführt durch: $I_{lum} = A_0 + \sum_{k=\{1...K\}} A_k \sin(n_k\Theta + \varphi_k)$, wobei $I_{lum}$ die Intensität des Lumineszenzsignals repräsentiert, $A_k$ ein Parameter der Amplitude des Lumineszenzsignals ist, $\theta$ den Analysewinkel der Polarisation des Lumineszenzsignals repräsentiert, $\varphi_k$ ein Parameter der Phasenverschiebung des Lumineszenzsignals in Bezug auf eine Referenzphase ist, $A_0$ ein Parameter ist, der den Minimalwert der Intensität des Lumineszenzsignals repräsentiert, $n_k$ eine streng positive ganze Zahl ist und k eine ganze Zahl ist, welche einen Summenindex im Bereich von 1 bis K angibt, und wobei die geschätzten charakteristischen Daten dem Parameter der Amplitude, der Phasenverschiebung, der Frequenz und/oder dem Minimalwert oder einer Kombination davon entsprechen.

**9.** System zur Analyse nach einem der Ansprüche 7 oder 8, wobei das Mittel zum Detektieren eine Kamera (700) umfasst, wobei das Gitter des vorbestimmten räumlichen Bereichs des Materials entsprechend den Punkten des Kamerasensors ausgewählt ist.

**10.** System zur Analyse nach einem der Ansprüche 7 bis 9, wobei das Mittel zum Anregen des Materials eine Lichtquelle (2, 200) umfasst, die so angeordnet ist, dass sie ein optisches Anregungssignal so emittiert, dass das Material ein Photolumineszenzsignal emittiert.

**11.** System zur Analyse nach einem der Ansprüche 7 bis 9, wobei das Mittel zum Anregen des Materials eine elektrische Quelle umfasst, die so angeordnet ist, dass sie ein elektrisches Signal an eine Vielzahl von auf dem Material angeordneten Elektroden so emittiert, dass das Material ein Elektrolumineszenzsignal emittiert.

**12.** System zur Analyse nach einem der Ansprüche 7 bis 9, wobei das Mittel zum Anregen des Materials eine thermische Quelle umfasst, die so angeordnet ist, dass sie das Material so erwärmt, dass das Material ein Thermolumineszenzsignal emittiert.

**13.** Computerprogramm, umfassend Codeteile zur Ausführung der Schritte eines Verfahrens nach einem der Ansprüche 1 bis 6 während der Ausführung des Programms durch das System zur Analyse nach Anspruch 7.

**14.** Datensatz, welcher ein Computerprogramm nach Anspruch 13 repräsentiert, beispielsweise durch Kompression oder Kodierung.

**15.** Nicht-flüchtiges Medium zum Speichern eines durch das System zur Analyse nach Anspruch 7 ausführbaren Programms, das einen Datensatz umfasst, der ein oder mehrere Programme repräsentiert, wobei das eine oder die mehreren Programme Befehle zum Analysieren der Kristallstruktur eines polykristallinen Halbleitermaterials umfassen, die bei der Ausführung des einen oder der mehreren Programme durch das System zur Analyse nach Anspruch 7 das System zur Analyse veranlassen, das Schätzen und das Erzeugen einer Darstellung nach dem Verfahren nach einem der Ansprüche 1 bis 6 durchzuführen.

**Claims**

1. A method for analysing the crystal structure of a polycrystalline semiconductor material comprising:

   - exciting the material in order to make the material emit a luminescent signal;
   - detecting, at each point of a mesh in a preset spatial region of the material, the luminescent signal at a variable polarization angle, in a frequency band of width greater than or equal to the width of the bandgap of the material;
   - estimating, at each point of the mesh in the preset spatial region of the material, from the signal detected for said point of the mesh, a data characteristic of the modulation of the luminescent signal, modelled by a sum of sine waves, as a function of the polarization angle;
   - generating a representation of the characteristic data over all of the points of the mesh in the preset spatial region.

2. The method according to Claim 1, in which the model of the modulated luminescent signal is of the form :

$$I_{lum} = A_0 + \sum_{k=\{1\dots K\}} A_k . \sin(n_k\theta + \varphi_k)$$

,

   where $I_{lum}$ represents the intensity of the luminescent signal, $A_k$ is an amplitude parameter of the luminescent signal, $\theta$ represents the analysis agle of the polarization of the luminescent signal, $\varphi_k$ is a parameter of the phase shift of the luminescent signal with respect to a phase reference, $A_0$ a parameter representing the minimum value of the intensity of the luminescent signal, $n_k$ being a strictly positive integer, and k is a natural integer summation index ranging from 1 to K, and in which the estimated characteristic data corresponds to the amplitude, phase shift, frequency and/or minimum value parameter, or to one of their combinations.

3. The method according to either one of the preceding claims, in which the luminescent signal is detected by means of a camera (700), the preset spatial region mesh on the material corresponding by choice with points on the sensor of the camera.

4. The method according to any one of Claims 1 to 3, in which exciting the material comprises the optical excitation of the material with a light source (2, 200) in order to make the material emit a photoluminescent signal.

5. The method according to any one of Claims 1 to 3, in which exciting the material comprises the electrical excitation of the material with an electrical source over a number of electrodes placed on the material in order to make the material emit an electroluminescent signal.

6. The method according to any one of Claims 1 to 3, in which exciting the material comprises heating the material with a thermal source in order to make the material emit a thermoluminescent signal.

7. A system for analysing the crystal structure of a polycrystalline semiconductor material, comprising:

   - means for exciting the material, arranged to excite the material in order to make the material emit a luminescent signal;
   - means for detecting (7, 700), at each point of a mesh in a preset spatial region of the material, the luminescent signal at a variable polarization angle, in a frequency band of width greater than or equal to the width of the bandgap of the material;
   - a data processing unit (8, 800, 601), comprising:

      a computer processor (602) operationally coupled to memory means (9, 900, 604) and to an input/output interface module, the memory means being configured to store data corresponding to the signal detected for each point of the mesh;
      an analyser, which is executed by the computer processor and configured to:

         estimate, at each point of the mesh in the preset spatial region of the material, from the signal detected for said point of the mesh, a data characteristic of the modulation of the luminescent signal, modelled by a sum of sine waves, as a function of the polarization angle; and generate a representation of the characteristic data over all of the points of the mesh in the preset spatial region.

8. The system according to Claim 7, in which the analyser is furthermore configured to estimate a characteristic data as a function of a model of the modulated luminescent signal of the form:

$$I_{lum} = A_0 + \sum_{k=\{1\dots K\}} A_k . \sin(n_k\theta + \varphi_k)$$

,

   where $I_{lum}$ represents the intensity of the luminescent signal, $A_k$ is an amplitude parameter of the luminescent signal, $\theta$ represents the analysis angle of the polarization of the luminescent signal, $\varphi_k$ is a parameter of the phase shift of the luminescent signal with respect to a phase reference, $A_0$ a parameter representing the minimum value of the intensity of the luminescent signal, $n_k$ being a strictly positive integer, and k is an integer summation index ranging from 1 to K, and in which the estimated characteristic data corresponds to the amplitude, phase shift, frequency and/or minimum value parameter, or to one of their combinations.

9. The system according to either one of Claims 7 and 8, in which the detecting means comprises a camera (700), the preset spatial region mesh on the material corresponding by choice with points on the sensor of the camera.

10. The system according to any one of Claims 7 to 9, in which the means for exciting the material comprises a light source (2, 200) arranged to emit an optical excitation signal in order to make the material emit a photoluminescent signal.

11. The system according to any one of Claims 7 to 9, in which the means for exciting the material comprises an electrical source arranged to emit an electrical signal over a number of electrodes placed on the material in order to make the material emit an electroluminescent signal.

12. The system according to any one of Claims 7 to 9, in which the means for exciting the material comprises a thermal source arranged to heat the material in order to make the material emit a thermoluminescent signal.

13. A computer program comprising code portions for implementing steps of a method according to any one of Claims 1 to 6 on execution of said program by the system according to Claim 7.

14. A set of data representing, for example by way of compression or encoding, a computer program according to Claim 13.

15. A non-transient medium for storing a program executable by the system according to Claim 7, comprising a set of data representing one or more programs, said one or more programs comprising instructions for analysing the crystal structure of a polycrystalline semiconductor material that, on execution of said one or more programs by the system according to Claim 7, leads said system to perform the step of estimating and the step of generating a representation according to the method of any one of Claims 1 to 6.

FIG.1

FIG.2

FIG.3

FIG.4

FIG.5

**Fig. 6a**

**Fig. 6b**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. PELOSO ; B. HOEX ; A-G. ABERLE.** Polarization analysis of luminescence for the characterization of silicon wafer solar cells. *Applied Physics Letters,* 2011, vol. 98, 171914